# EUROPEAN PATENT APPLICATION

(11) **EP 4 350 514 A1**
(43) Date of publication of application: **10.04.2024**
(21) Application number: 22848599.1
(22) Date of filing: 27.07.2022
(51) Int. Cl.: G06F 9/451

(54) **CONTROL METHOD AND WEARABLE DEVICE**

(30) Priority: 30.07.2021 CN 202110875676
(71) Applicant: Huawei Technologies Co., Ltd., Shenzhen, Guangdong 518129 (CN)
(72) Inventor: YANG, Bo, Shenzhen, Guangdong 518129 (CN); ZHAO, Menglong, Shenzhen, Guangdong 518129 (CN); YANG, Wenjian, Shenzhen, Guangdong 518129 (CN); PAN, Qinjun, Shenzhen, Guangdong 518129 (CN)
(74) Representative: Körber, Martin Hans
(86) International application number: PCT/CN2022/108360
(87) International publication number: WO 2023/005994

(57) **Abstract**

This application provides a control method and a wearable device. The method includes: A user may remove a housing of the wearable device from a movement and change the housing. After the user mounts a changed housing to the movement, the movement may identify feature information included in the housing to identify the feature information included in the changed housing, and then obtain parameter information of the housing based on a pre-stored correspondence between the parameter information of the housing and the feature information, to make a corresponding change in the wearable device based on the parameter information of the housing, such as a change of a user interface, a change of an operating system, and a change of a function of a button. According to the method in this application, the housing can be changed conveniently, and compatibility of the changed housing can be improved, thereby achieving personalized design of the wearable device and improving user experience.

## Description

### CROSS-REFERENCE TO RELATED APPLICATIONS

This application claims priority to Chinese Patent Application No. 202110875676.5, filed with the China National Intellectual Property Administration on July 30, 2021 and entitled "CONTROL METHOD AND WEARABLE DEVICE", which is incorporated herein by reference in its entirety.

### TECHNICAL FIELD

This application relates to the field of electronic device technologies, and in particular, to a control method and a wearable device.

### BACKGROUND

As electronic technologies develop, there are more types of terminal devices, such as a smartphone, a tablet computer, and a wearable device. Common wearable devices are, for example, a smartwatch, a smartband, smart glasses, and the like.

Currently, a wearable device usually includes two parts: a housing and a movement. Because the housing is usually integrally fixed to a screen and an internal circuit board, in use, if the housing is damaged or a user wants to change the housing into a housing of another style, the housing needs to be separated from the screen and the internal circuit board to change the housing, which is inconvenient. In addition, the changed housing may not be a housing produced by a manufacturer corresponding to the wearable device. This may cause poor compatibility in a use process, resulting in poor user experience.

### SUMMARY

This application provides a control method and a wearable device, to resolve problems of inconvenient housing change and poor compatibility.

According to a first aspect, this application provides a control method. The method is applied to a wearable device. The wearable device includes a movement and a housing. The movement is detachably mounted in the housing. Specifically, the method may include: The movement obtains first information in response to a first operation that is for the wearable device, where the first information is related to the housing, and the first operation includes mounting the movement in the housing; and the movement controls, based on the first information, a color and/or a display interface of the wearable device to change correspondingly.

According to the foregoing technical solution, after a watch housing is changed, the movement may identify a changed watch housing, and may control the wearable device to adaptively change based on parameter information of the watch housing, so that compatibility after the watch housing is changed can be improved, thereby achieving personalized design of the wearable device and improving user experience.

In a possible design, that the movement controls, based on the first information, a color and/or a display interface of the wearable device to change correspondingly specifically includes: The movement obtains second information based on the first information; and the movement controls, based on the second information, the color and/or the display interface of the wearable device to change correspondingly.

According to the foregoing technical solution, the movement may obtain the second information based on information related to the housing, to control a change of the color and/or the display interface of the wearable device, so that flexibility of the wearable device can be improved, thereby improving user experience.

In a possible design, a bottom housing and/or a bezel of the wearable device are/is coated with an electrochromic material, and the second information includes color information of the housing. The movement controls, based on the color information, a color of the bottom housing and/or a color of the bezel of the wearable device to match the color information of the housing.

According to the foregoing technical solution, if the bottom housing and/or the bezel of the wearable device are/is coated with the electrochromic material, after the housing is mounted to the movement, the movement may control the color of the bottom housing and/or the color of the bezel of the wearable device to change based on a color of the housing, for example, to change into a color that is the same as or similar to the color of the housing. In this way, an appearance of the wearable device can be more beautiful, thereby improving user experience.

In a possible design, the second information includes manufacturer information of the housing. The movement controls, based on the manufacturer information, a user interface UI of the wearable device to change. The UI includes one or more of a UI shape, a color, text, or a location.

According to the foregoing technical solution, when manufacturers of watch housings are different, a user interface of the wearable device may be changed correspondingly. In other words, the user interface is displayed based on an interface designed by a corresponding manufacturer, to improve compatibility.

In a possible design, that the movement controls, based on the first information, a color and/or a display interface of the wearable device to change correspondingly specifically includes: displaying first prompt information, where the first prompt information is used for prompting a user whether to switch an operating system of the wearable device; and switching a first operating system to a second operating system in response to a second operation that is for the wearable device, where the first operating system is an operating system running on the wearable device before the first operation, and the second operating system is different from the first operating system.

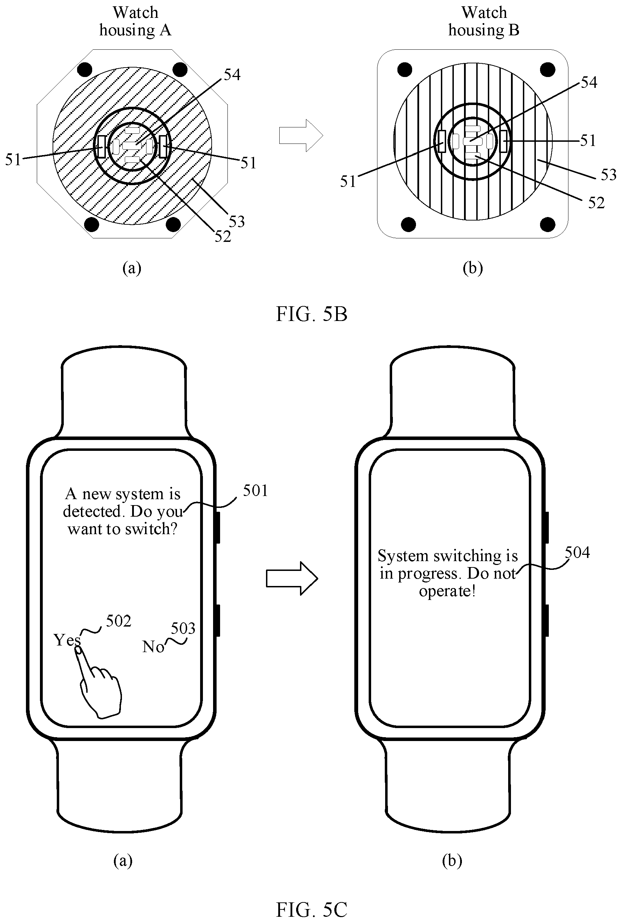

FIG. 5C is used as an example. The second operation herein may be a tap operation on a button "Yes" in an interface shown in section (a) of FIG. 5C.

According to the foregoing technical solution, if operating systems corresponding to the housings before and after the change are different, the operating system may be adaptively switched after the housing change. Specifically, the movement may automatically switch the operating system or display prompt information to allow the user to manually switch the operating system.

In a possible design, the wearable device further includes a button. In a case that the wearable device includes a button, the following two cases may be specifically included.

Case 1: That the movement controls, based on the first information, a color and/or a display interface of the wearable device to change correspondingly specifically includes: displaying second prompt information, where the second prompt information is used for prompting a user whether to change a function of the button of the wearable device; displaying a button function setting interface in response to a third operation that is for the wearable device, where the interface includes at least one option, and the option is used for setting a function performed by the button; and controlling, in response to a fourth operation that is for the wearable device, the button to perform configuration based on the specified function.

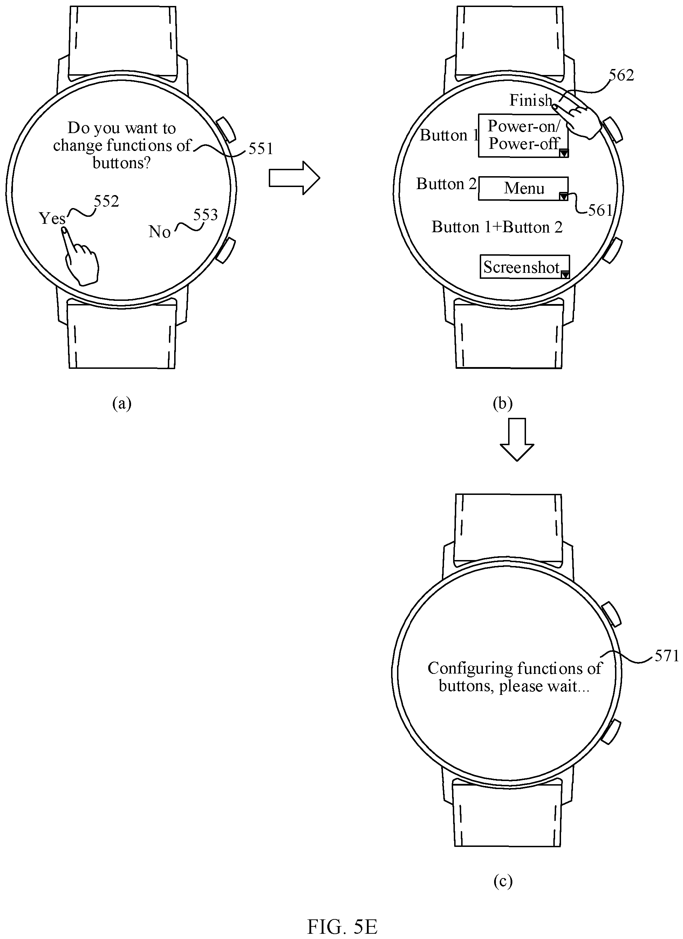

FIG. 5E is used as an example. The third operation herein may be a tap operation performed by the user on a button "Yes" on an interface shown in section (a) of FIG. 5E, and the fourth operation may be a tap operation performed by the user on a button "Done" on an interface shown in section (b) of FIG. 5E.

In this way, the user may set the function of the button based on usage habits of the user, so that user experience can be improved.

Case 2: That the movement controls, based on the first information, a color and/or a display interface of the wearable device to change correspondingly specifically includes: displaying third prompt information, where the third prompt information is used for prompting a user of a function corresponding to the button.

In this way, the user can learn of the function of the button through prompt information, thereby facilitating subsequent use.

In a possible design, the movement includes a light source, the housing includes a lens, and the lens is configured to converge light emitted by the light source.

That the movement controls, based on the first information, a color and/or a display interface of the wearable device to change correspondingly specifically includes: displaying fourth prompt information, where the fourth prompt information is used for prompting a user that a flashlight is a high-intensity flashlight; or displaying, to a user in response to a fifth operation that is for the wearable device, that a flashlight is a high-intensity flashlight.

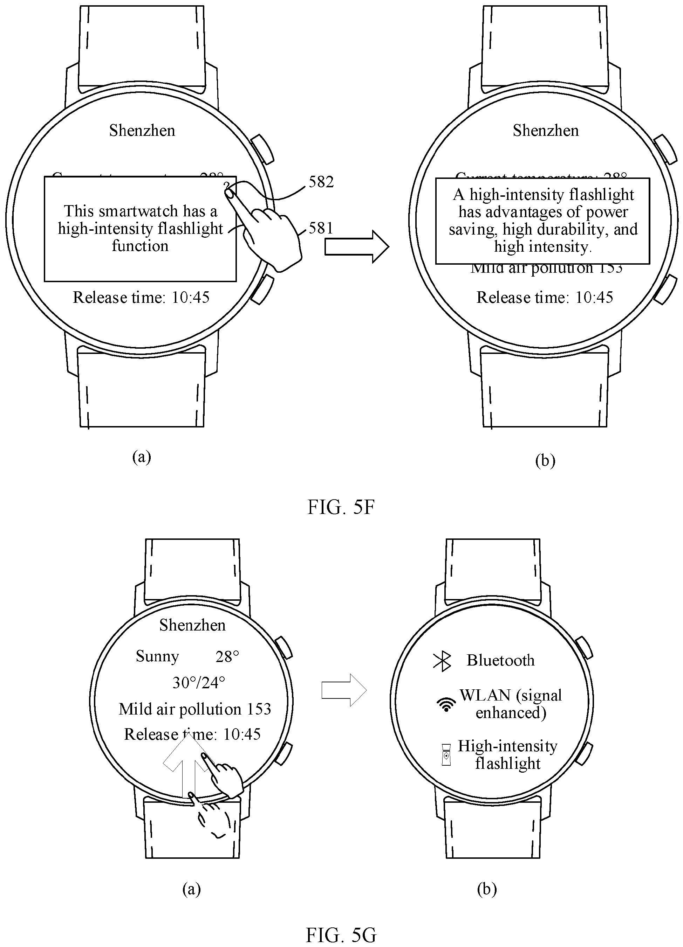

The fifth operation herein may be a gesture operation in the schematic diagram shown as section (a) of FIG. 5G, that is, an operation of flicking upward to display a status bar.

According to the foregoing technical solution, the user may be prompted of a flashlight level, for example, the high-intensity flashlight, through prompt information. Alternatively, the user may be prompted of the flashlight level through an icon name in the status bar based on a user operation, such as an operation of opening the status bar, so that user experience can be improved.

In a possible design, that the movement controls, based on the first information, a color and/or a display interface of the wearable device to change correspondingly specifically includes: displaying fourth prompt information, where the fourth prompt information is used for prompting a user of an antenna signal capability of the wearable device; or displaying, in response to a sixth operation that is for the wearable device, that a flashlight is a high-intensity flashlight. The sixth operation herein may be a gesture operation in the schematic diagram shown as section (a) of FIG. 5G, that is, an operation of flicking upward to display a status bar.

According to the foregoing technical solution, the user can learn of the antenna signal capability of the wearable device. For example, when a material of the housing is metal, the housing made of metal may be used to enable the housing to be electrically connected to the movement via a feed point, to improve antenna performance.

In a possible design, that the movement controls, based on the first information, a color and/or a display interface of the wearable device to change correspondingly specifically includes: displaying sixth prompt information, where the sixth prompt information is used for prompting a user of a waterproof level or a waterproof capability of the wearable device.

According to the foregoing technical solution, the user can learn of the waterproof level or the waterproof capability of the wearable device through the prompt information. In this way, damage to the wearable device caused when the user does not know about waterproof performance can be prevented.

In a possible design, that the movement controls, based on the first information, a color and/or a display interface of the wearable device to change correspondingly specifically includes: displaying seventh prompt information in response to a seventh operation that is for the wearable device, where the seventh prompt information is used for prompting a user of an operation manner of performing detection by using a physiological sensor.

The seventh operation herein may be a tap operation performed by the user on an application, for example, a heart rate measurement application.

According to the foregoing technical solution, the user can perform a correct operation based on the prompt information, to prevent a problem of inaccuracy of a detection result caused by an improper operation, thereby improving user experience.

In a possible design, the movement includes a Hall component, the housing includes at least one magnetic piece, the first information includes magnetic field induction information, and the magnetic field induction information is magnetic field information of the at least one magnetic piece sensed by the Hall component when the movement is mounted in the housing. Alternatively, the movement includes a near field communication (NFC) module, the housing includes an inductive card reader or an inductive card, and the first information is information sensed by the NFC module when the movement is mounted in the housing. Alternatively, the movement includes a photoelectric element, the housing includes a coating, and the first information includes information obtained, based on an optical signal reflected by the coating, by the photoelectric element when the movement is mounted in the housing.

According to the foregoing technical solution, the movement may obtain the first information on the housing via a Hall effect, NFC induction, a photoelectric element, or the like.

In a possible design, the second information includes at least one of the following information: a watch housing type, a manufacturer, a model, a brand logo, an operating system, a watch housing color, a bottom housing color, a bezel color, a waterproof level, a flashlight level, a watch housing shape, and a watch housing material.

In a possible design, that the movement obtains second information based on the first information specifically includes: The movement determines, based on a preset correspondence, the second information corresponding to the first information.

According to the foregoing technical solution, the movement may find, based on the preset correspondence, the second information corresponding to the first information related to the housing, to change the color and/or the display interface of the wearable device correspondingly based on the identified second information, such as a type, a manufacturer, an operating system, and a color of the housing.

In a possible design, that the movement controls, based on the second information, the color and/or the display interface of the wearable device to change correspondingly specifically includes: comparing the second information with pre-stored third information, where the third information is parameter information running on the wearable device before the first operation; and when the second information is partially different from the third information, the movement controls, based on a part of the second information that is different from the third information, the color and/or the display interface of the wearable device to change correspondingly.

According to the foregoing technical solution, the movement may compare parameter information running on the wearable device before and after the first operation is performed, and then control the color and/or the display interface of the wearable device to change correspondingly based on a comparison result.

According to a second aspect, this application provides a wearable device. The wearable device includes a movement. The movement includes an identification module; a housing, where the housing includes a feature carrying module, and when the housing is mounted to the movement, the identification module senses first information carried on the feature carrying module; one or more processors, disposed in the movement; one or more memories, disposed in the movement; and one or more computer programs, where the one or more computer programs are stored in the one or more memories, the one or more computer programs include instructions, and when the instructions are invoked and executed by the one or more processors, the wearable device is enabled to execute the method according to any one of the first aspect and the possible designs of the first aspect.

According to a third aspect, this application further provides a wearable device. The wearable device includes modules/units for executing the method according to any one of the first aspect or the possible designs of the first aspect. The modules/units may be implemented by hardware, or may be implemented by hardware executing corresponding software.

According to a fourth aspect, this application further provides a computer-readable storage medium. The computer-readable storage medium stores instructions. When the instructions are run on the wearable device, the wearable device is enabled to execute the method according to any one of the first aspect and the possible designs of the first aspect.

According to a fifth aspect, this application provides a computer program product. When the computer program product runs on a wearable device, the wearable device is enabled to execute the method according to any one of the first aspect and the possible designs of the first aspect in embodiments of this application.

For each of the second aspect to the fifth aspect and technical effects that may be achieved by the aspects, refer to the description of technical effects that may be achieved by each possible solution in the first aspect. Details are not described herein again.

### BRIEF DESCRIPTION OF DRAWINGS

FIG. 1A is a schematic diagram of a structure of a wearable device according to an embodiment of this application;
FIG. 1B is a block diagram of a software structure of a smartwatch 100 according to an embodiment of this application;
FIG. 1C is a schematic diagram of a structure of a smartwatch according to an embodiment of this application;
FIG. 2 is a schematic diagram of a housing of a smartwatch according to an embodiment of this application;
FIG. 3 is a flowchart of a control method according to an embodiment of this application;
FIG. 4 is a schematic diagram of a smartwatch according to an embodiment of this application;
FIG. 5A to FIG. 5I are schematic diagrams of a user interface of a smartwatch according to an embodiment of this application; and
FIG. 6 is a block diagram of a structure of another wearable device according to an embodiment of this application.

### DESCRIPTION OF EMBODIMENTS

The following describes the technical solutions in embodiments of this application with reference to the following accompanying drawings in embodiments of this application.

A wearable device usually includes two parts: a housing and a movement. During assembly of the device, the housing is usually integrally fixed to a screen above the movement and a circuit board inside the movement. In a use process, in a case that, for example, the housing is damaged, a user needs to separate the housing from the screen and the internal circuit board to change the housing. The foregoing operation for housing change is complicated for the user. In addition, because the wearable device may be worn by a user, with diversified demands for appearance decoration, the user also expects to be able to change the housing into a housing of another style. Even if the housing is changed by the user through the foregoing complicated operation, if a changed housing is not a housing manufactured by a manufacturer corresponding to the wearable device, poor compatibility in a use process may be caused, resulting in poor user experience.

Specifically, with regard to a smartwatch, a housing of the smartwatch mainly includes a front housing component and a rear housing component. Generally, in an assembly process, internal components are respectively mounted to the front and rear housings, and then the front and rear housings are combined together. Because the housing is fixed to the screen and the internal circuit board, when the housing is damaged, it is inconvenient to change the housing. In addition, in current smartwatches, only watchbands can be freely changed. If a user wants to change another component, such as a housing, it is inconvenient to perform the change, resulting in poor user experience.

In view of this, embodiments of this application provide a wearable device and a control method thereof. The wearable device includes a housing and a movement. Circuit components such as a screen and an internal circuit board are integrated in the movement. The housing is detachably mounted to the movement. A feature carrying module is disposed on the housing. An identification module is correspondingly disposed on the movement. After the user mounts the housing to the movement, the movement may identify housing feature information carried on the feature carrying module, and then adjust a color, a user interface, a function, a configuration, and the like of the wearable device based on the housing feature information. According to the method, the wearable device can meet personalized design requirements by designing housings with different appearances and simply fitting and fixing the movement in a housing used. In addition, the movement can adapt to different types of housings, thereby greatly improving user experience. It should be understood that when the wearable device is a smartwatch, the housing is a watch housing of the smartwatch.

It should be noted that the control method provided in embodiments of this application is applied to a wearable device (such as a smartwatch, a smart band, or smart glasses). In addition, an example embodiment of the wearable device includes, but is not limited to, a wearable device that runs a WATCH OS^{®}, a WEAR OS^{®}, a Lite OS^{®}, a Harmony OS^{®}, or another operating system.

The following describes a structure of the wearable device by using a smartwatch as an example.

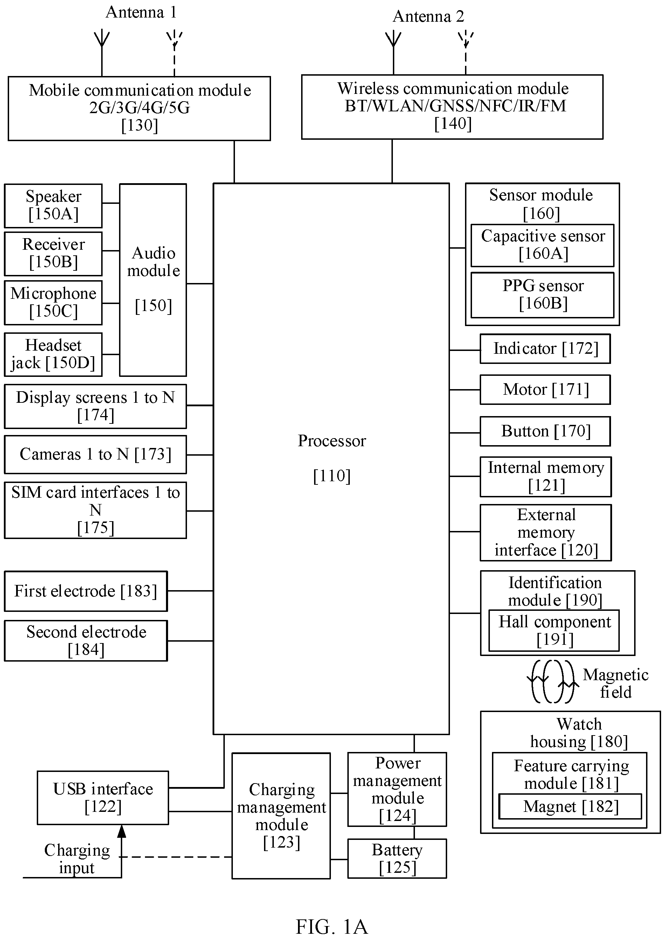

As shown in FIG. 1A, the smartwatch 100 may include a processor 110, an external memory interface 120, an internal memory 121, a universal serial bus (universal serial bus, USB) interface 122, a charging management module 123, a power management module 124, a battery 125, an antenna 1, and an antenna 2, a mobile communication module 130, a wireless communication module 140, an audio module 150, a speaker 150A, a receiver 150B, a microphone 150C, a headset jack 150D, a sensor module 160, a button 170, a motor 171, an indicator 172, a camera 173, a display screen 174, a subscriber identification module (subscriber identification module, SIM) card interface 175, a first electrode 183, a second electrode 184, an identification module 190, a Hall component 191 (or a Hall sensor), and the like. The sensor module 160 may include a capacitive sensor 160A, a photoplethysmograph (Photoplethysmograph, PPG) sensor 160B, and the like. The foregoing circuit components may be disposed inside the movement or integrated on the surface of the movement. In addition, the smartwatch 100 may further include a watch housing 180 and a feature carrying module 181 disposed on the watch housing, where the feature carrying module 181 may include a magnet 182.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, and a digital signal processor (digital signal processor, DSP), a baseband processor, a neural-network processing unit (neural-network processing unit, NPU), and/or the like. Different processing units may be independent components, or may be integrated into one or more processors. The controller may be a nerve center and a command center of the smartwatch 100. The controller may generate an operation control signal based on instruction operation code and a time sequence signal, to implement control of instruction fetching and instruction execution. A memory may be further disposed in the processor 110, and is configured to store instructions and data. In some embodiments, the memory in the processor 110 is a cache. The memory may store instructions or data just used or cyclically used by the processor 110. If the processor 110 needs to use the instructions or the data again, the processor may directly invoke the instructions or the data from the memory. This avoids repeated access, reduces waiting time of the processor 110, and therefore improves system efficiency. In embodiments of this application, the processor 110 may generate a change instruction of the smartwatch based on identified watch housing information, and execute the change instruction.

The USB interface 122 is an interface that conforms to a USB standard specification, and may be specifically a mini USB interface, a micro USB interface, a USB Type-C interface, or the like. In some embodiments, the USB interface 122 may be configured to be connected to a charger to charge the smartwatch 100 (for example, a kids watch). The charging management module 123 is configured to receive charging input from the charger. The power management module 124 is configured to be connected to the battery 125, the charging management module 123, and the processor 110. The power management module 124 receives input from the battery 125 and/or the charging management module 123, and supplies power to the processor 110, the internal memory 121, the external memory, the display screen 174, the camera 173, the wireless communication module 140, and the like. In some embodiments, the smartwatch 100 may be charged via a magnetic induction coil, that is, wireless charging.

A wireless communication function of the smartwatch 100 may be implemented by using the antenna 1, the antenna 2, the mobile communication module 130, the wireless communication module 140, the modem processor, the baseband processor, and the like. The antenna 1 and the antenna 2 are configured to transmit and receive electromagnetic wave signals. Each antenna in the smartwatch 100 may be configured to cover one or more communication bands. Different antennas may be further reused, to improve antenna utilization. For example, the antenna 1 may be reused as a diversity antenna of a wireless local area network. In other embodiments, the antenna may be used in combination with a tuning switch.

The mobile communication module 130 may provide a solution that is for wireless communication such as 2G, 3G, 4G, and 5G and that is applied to the smartwatch 100. The mobile communication module 130 may include at least one filter, a switch, a power amplifier, a low noise amplifier (low noise amplifier, LNA), and the like. The mobile communication module 130 may receive an electromagnetic wave via the antenna 1, perform processing such as filtering and amplification on the received electromagnetic wave, and transmit the electromagnetic wave to the modem processor for demodulation. The mobile communication module 130 may further amplify a signal modulated by the modem processor. The amplified signal is converted into an electromagnetic wave for radiation via the antenna 1. In some embodiments, at least some functional modules of the mobile communication module 130 may be disposed in the processor 110. In some embodiments, at least some functional modules of the mobile communication module 130 and at least some modules of the processor 110 may be disposed in a same component.

The wireless communication module 140 may provide a solution that is for wireless communication such as a wireless local area network (wireless local area network, WLAN) (such as a wireless fidelity (wireless fidelity, Wi-Fi) network), Bluetooth (Bluetooth, BT), a global navigation satellite system (global navigation satellite system, GNSS), frequency modulation (frequency modulation, FM), near field communication (near field communication, NFC), and infrared (infrared, IR) and that is applied to the smartwatch 100. The wireless communication module 140 may be one or more components integrated to form at least one communication processor module. The wireless communication module 140 receives an electromagnetic wave via the antenna 2, performs frequency modulation and filtering on the electromagnetic wave signal, and sends the processed signal to the processor 110. The wireless communication module 140 may further receive a to-be-sent signal from the processor 110, and perform frequency modulation and amplification on the signal. The processed signal is converted into an electromagnetic wave for radiation via the antenna 2. For example, the smartwatch 100 may be connected, via Bluetooth, to another terminal such as a mobile phone of a user using the smartwatch, and then synchronize motion sensor data such as a step count, a running distance, and a pace as well as physiological sensor data such as a heart rate, blood oxygen, and an electrocardiogram to an exercise and health application of another terminal such as a mobile phone, thereby facilitating viewing from different modules of the application by the user.

In some embodiments, in the smartwatch 100, the antenna 1 is coupled to the mobile communication module 130, and the antenna 2 is coupled to the wireless communication module 140, so that the smartwatch 100 can communicate with a network and another device by using a wireless communication technology. The wireless communication technology may include technologies such as a global system for mobile communications (global system for mobile communications, GSM), general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), a 5th generation (5th generation, 5G) mobile communication system, a future communication system such as a 6th generation (6th generation, 6G) system, BT, GNSS, WLAN, NFC, FM, and/or IR. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The capacitive sensor 160A includes a parallel-plate capacitor having two electrode plates. One of the electrode plates is disposed on a surface of the smartwatch 100, and the other electrode plate may be disposed on a flexible printed circuit (Flexible Printed Circuit, FPC). After the electrode plate disposed on the surface of the smartwatch 100 contacts skin of a user or an object made of another material, the capacitive sensor 180A may detect a change of a capacitance value, and whether the smartwatch 100 is worn can be determined based on the capacitance value. For example, whether the capacitance value of the capacitive sensor 160A falls within a preset capacitance value range is detected. When the preset capacitance value falls within the preset capacitance value range, it is determined that the smartwatch 100 is worn.

A PPG sensor 160B includes a light emitter and a light sensor. Heart rate measurement by using the PPG sensor 160B is based on a principle of absorption of light by matters. A light emitter in the PPG sensor 160B irradiates a blood vessel of the skin, and the light sensor receives light from the skin. Because different volumes of blood in a blood vessel absorb different amounts of light, when a heart beats, the blood flow increases, and the amount of light absorbed increases correspondingly. The blood flow decreases between heart beats, and the amount of light absorbed decreases correspondingly. Therefore, a heart rate can be measured based on light absorbance of the blood. In operation, the light emitter may transmit a light beam to the skin of the user, and the light beam may be reflected by the skin of the user and received by the light sensor. The light sensor may convert the light into an electrical signal indicating an intensity of the light. The electrical signal may be in an analog form and may be converted to a digital form by an analog to digital converter. A digital signal from the analog to digital converter may be a time domain PPG signal fed to the processor 110. The processor 110 may receive digitized signals from the light sensor, and may process the signals to provide a heart rate or wearing state output signal to a memory, a visual display, an audible annunciator, a touchscreen, or another output indicator. In some embodiments, the light emitter and a light receiver (also referred to as a light sensor) may be disposed inside a rear housing aligned with a sapphire glass lens (also referred to as a heart rate glass) at a center of a bottom housing, and the light sensor for detecting reflected light may be disposed around the light emitter that emits light. The light emitter and the light sensor that measure physiological data such as the heart rate are disposed around the light sensor that detects light.

It should be understood that the smartwatch 100 may be further provided with another sensor, such as a pressure sensor, a gyroscope, an acceleration sensor, an ambient light sensor, a barometer, a hygrometer, a thermometer, and an infrared sensor. Details are not described herein again.

The display screen 174 is configured to display information such as time, a motion state, a body indicator of a wearer, or a wearing state. The display screen 174 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like.

The camera 173 is configured to capture a static image or a video. The smartwatch 100 may implement a photography function by using the ISP, the camera 173, the video codec, the GPU, the display screen 174, the application processor, and the like.

The internal memory 121 may be configured to store computer-executable program code, and the executable program code includes instructions. The processor 110 executes various functional applications and data processing of the smartwatch 100 by running the instructions stored in the internal memory 121. The internal memory 121 may include a program storage area and a data storage area. The program storage area may store an operating system, software code of at least one application (for example, iQIYI or WeChat), and the like. The data storage area may store data (for example, an image or a video) generated during use of the smartwatch 100. In addition, the internal memory 121 may include a high-speed random access memory, and may further include a nonvolatile memory, for example, at least one magnetic disk storage device, a flash memory, or a universal flash storage (universal flash storage, UFS). In embodiments of this application, the internal memory 121 may be configured to store information corresponding to different types of watch housings, for example, parameter information of the watch housings and feature information of the watch housings.

The external memory interface 120 may be configured to be connected to an external memory card, for example, a micro SD card, to expand a storage capability of the smartwatch 100. The external memory card communicates with the processor 110 through the external memory interface 120, to implement a data storage function. For example, files such as a picture and a video are stored on the external memory card.

By using the audio module 150, the speaker 150A, the receiver 150B, the microphone 150C, the headset jack 150D, the application processor, and the like, the smartwatch 100 may implement an audio function, for example, music playback and recording.

The button 170 includes a power button, a volume button, and the like. The button 170 may be a mechanical button, or may be a touch button. The smartwatch 100 may receive button input, and generate key signal input related to user settings and function control of the smartwatch 100. The motor 171 may generate a vibration prompt. The motor 171 may be configured to provide an incoming call vibration prompt and may also be configured to provide a touch vibration feedback. For example, touch operations that are for different applications (such as photographing and audio playing) may correspond to different vibration feedback effects. The indicator 172 may be an indicator light, and may be configured to indicate a charging state and a change in battery charge level, or may be configured to indicate a message, a missed call, a notification, and the like. The SIM card interface 175 is configured to be connected to a SIM card. The SIM card may be inserted into the SIM card interface 175, or removed from the SIM card interface 175, to implement contact with or separation from the smartwatch 100. In some embodiments, the smartwatch 100 uses an eSIM, that is, an embedded SIM card. The eSIM card may be embedded in the smartwatch 100, and cannot be separated from the smartwatch 100.

The watch housing 180 is a housing of the smartwatch 100, and the watch housing 180 may be designed into different shapes, different colors, and the like. In some embodiments, the watch housing 180 may include a feature carrying module 181, and the feature carrying module 181 may include at least one magnet 182. The identification module 190 may be configured to identify the feature carrying module 181 on the watch housing 180. For example, the identification module 190 may include the Hall component 191. The Hall component 191 may identify a magnetic field strength, a magnetic field state, and the like of the magnet 182, to obtain related information of the watch housing 180, such as information such as a manufacturer, a shape, and a color, based on the magnetic field strength, the magnetic field state, and the like of the magnet 182.

In some embodiments, the smartwatch 100 may further include the first electrode 183 and the second electrode 184. For example, the bottom housing or a bezel of the smartwatch 100 may be coated with an electrochromic material. The electrochromic material may be provided on the first electrode 183. The second electrode may be connected to a ground wire. An electric field may be formed by the first electrode 183 and the second electrode 184, thereby changing the color of the bottom housing. It should be understood that positions of the first electrode 183 and the second electrode 184 are not limited in this application.

It may be understood that the components shown in FIG. 1A do not constitute a specific limitation on the smartwatch. In the smartwatch, more or fewer components than those shown in the figure may be further included, or some components may be combined or separated, or the components may be arranged in another manner.

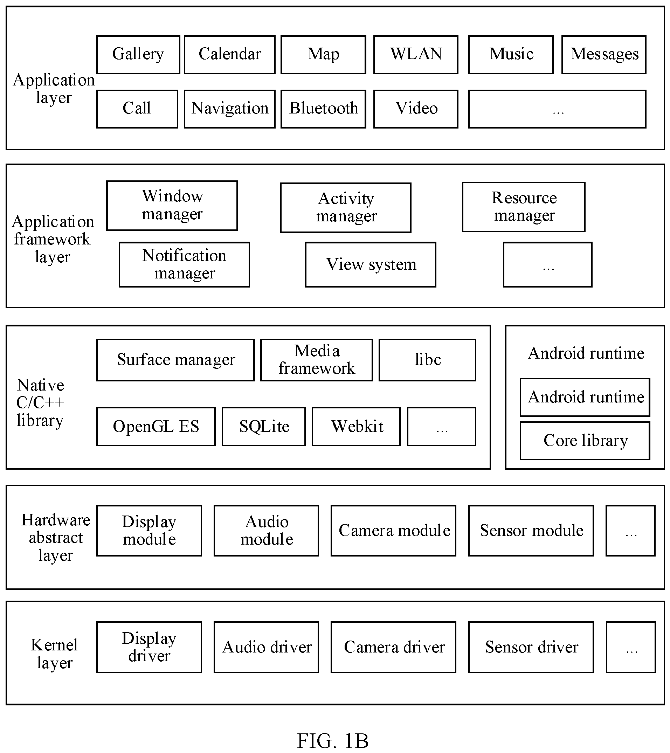

A software system of the smartwatch 100 may use a layered architecture, an event-driven architecture, a microkernel architecture, a microservice architecture, or a cloud architecture. As shown in FIG. 1B, a software structure of the smartwatch 100 is described as an example.

FIG. 1B is a block diagram of a software structure of a smartwatch 100 according to an embodiment of this application. The software structure may include a plurality of layers, and the role and task of each layer are clear. The layers communicate with each other via software interfaces. In some embodiments, the software system of the smartwatch 100 includes an application layer, an application framework layer, an Android runtime (Android runtime, ART), a native C/C++ library, a hardware abstract layer (Hardware Abstract Layer, HAL), and a kernel layer from top to bottom.

The application layer may include a series of application packages. As shown in FIG. 1B, the application package may include applications such as Camera, Gallery, Calendar, Call, Map, Navigation, Bluetooth, Music, Video, and Messages.

The application framework layer provides an application programming interface (application programming interface, API) and a programming framework for the applications in the application layer. The application framework layer includes some predefined functions.

As shown in FIG. 1B, the application framework layer may include a window manager, a view system, a resource manager, a notification manager, and the like.

The window manager provides a window manager service (window manager service, WMS). The WMS may be used for window management, window animation management, and surface management, and may be used as a transfer station for an input system.

The view system includes a visual control, for example, a control for displaying text or a control for displaying a picture. The view system may be configured to build an application. A display interface may include one or more views. For example, a display interface including an SMS notification icon may include a view for displaying text and a view for displaying a picture.

The resource manager provides a variety of resources, such as localized character strings, icons, pictures, layout files, and video files, for applications.

The notification manager enables an application to display notification information in a status bar, and may be configured to deliver an informative message that may disappear automatically after displayed for a short period of time, without a need of user interaction. For example, the notification manager is configured for informing completion of downloading, for message prompt, and so on. The notification manager may also provide, in a status bar at the top of the system, a notification in a form of a chart or scroll bar text, for example, a notification of an application running in the background, or provide a notification in a form of a dialog window on a screen, for example, display text information in the status bar, produce a prompt tone, make an electronic device vibrate, and make an indicator light flicker.

The Android runtime includes a core library and the Android runtime. The Android runtime is responsible for converting source code into machine code. The Android runtime mainly includes an ahead of time (ahead of time, AOT) compilation technology and a just in time (just in time, JIT) compilation technology.

The core library is mainly used to provide a function of a basic Java-like library, such as a basic data structure, mathematics, an IO, a tool, a database, and a network. The core library provides an API for a user to develop an Android application.

The native C/C++ library may include a plurality of functional modules, such as a surface manager (surface manager), a media framework (Media Framework), libc, OpenGL ES, SQLite, and Webkit.

The surface manager is configured to manage a display subsystem, and provide fusion of 2D and 3D layers for a plurality of applications. The media frame supports playback and recording in a plurality of commonly used audio and video formats, and static image files. The media library may support a plurality of audio and video encoding formats, such as MPEG4, H.264, MP3, AAC, AMR, JPG, and PNG. The OpenGL ES allows drawing and operation of 2D and 3D graphics in an application. The SQLite provides a lightweight relational database for an application of the electronic device 100.

The hardware abstract layer is run in user space (user space), encapsulates a driver of the kernel layer, and provides an invoking interface for an upper layer.

The kernel layer is a layer between hardware and software. The kernel layer includes at least a display driver, a camera driver, an audio driver, and a sensor driver.

The following describes a process of identifying a watch housing by the movement by using an example in which the feature carrying module includes a magnet and the identification module includes a Hall sensor.

After the user changes a watch housing A of the smartwatch 100 into a watch housing B, and mounts the watch housing B to the movement, the Hall sensor on the movement of the smartwatch 100 may receive operations of changing and mounting the watch housing by the user. At the same time, the Hall sensor may sense a magnetic field state on the housing, and then report the magnetic field state to the sensor driver in the kernel layer. Next, the sensor driver sends the magnetic field state to the core library. The core library compares the magnetic field state with a pre-stored feature information set of the watch housing, to find a corresponding watch housing type from the pre-stored feature information set of the watch housing, and further obtain parameter information of the watch housing B. Finally, the application framework layer may provide a corresponding display interface for the application layer based on the parameter information of the watch housing obtained by the core library. The function of a button is used as an example. The core library may complete setting of the function of the button, and then report the function of the button to the application layer, or the application layer may set the function of the button.

Different identification results correspond to loading and starting different application layers, so that the smartwatch 100 presents different operating system interfaces and functions by changing the watch housing. For example, for Harmony operating systems, different operating systems may have a same kernel layer, different system service layers, different framework layers, and different application layers. Alternatively, different operating systems may have a same kernel layer, a same system service layer, different framework layers, and different application layers.

In some embodiments, a software package file corresponding to the smartwatch 100, for example, a configuration file of an operating system, may be stored on the smartwatch 100 in local. Certainly, only a kernel file and an application layer file of a default watch housing (which may be understood as a factory setting) may be stored in local, and then an application layer file corresponding to another watch housing is downloaded through the network and loaded.

In the following embodiment, the smartwatch 100 shown in FIG. 1A is used as an example for description.

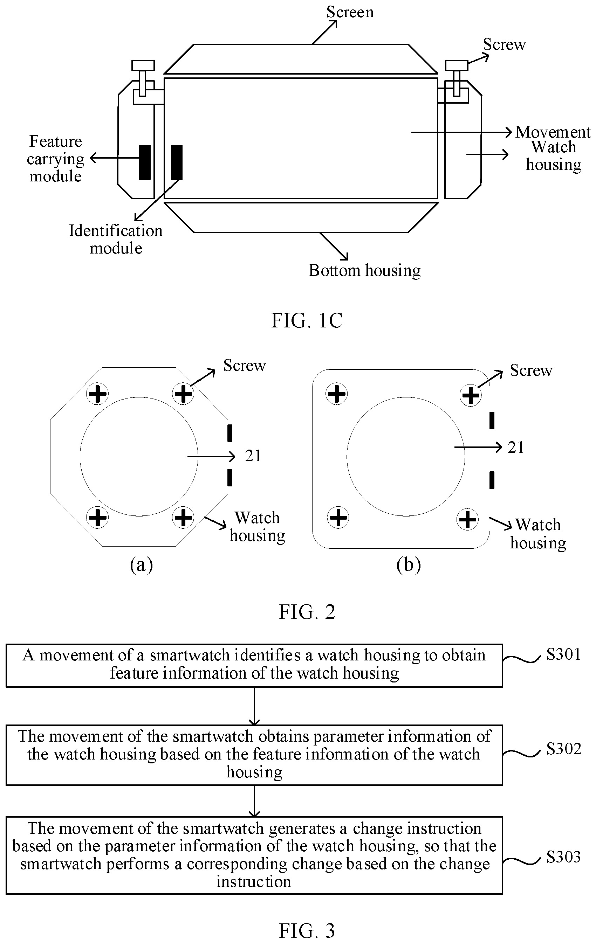

FIG. 1C is a schematic diagram of a structure of a smartwatch according to an embodiment of this application. As shown in FIG. 1C, the smartwatch may include a watch housing, a movement, a screen, a bottom housing, and the like. The watch housing may include a feature carrying module, and the feature carrying module may include a magnetic piece such as a magnet. The movement may include an identification module and a processor. The identification module is configured to identify a feature carrying module, for example, identify information such as a magnetic field state. The processor is configured to search for parameter information of the watch housing based on the information identified by the identification module, for example, information such as a manufacturer, a style, a model, a system configuration, a function configuration, and a performance configuration, and process an appearance and/or an interface of the smartwatch based on the parameter information of the watch housing, for example, adjust a bottom housing color of the smartwatch based on an identified watch housing color. In some embodiments, the screen and the bottom housing may be pre-integrated onto the movement.

The structure in FIG. 1C is further described by using the schematic diagram shown in FIG. 1A as an example. In some embodiments, the watch housing may include a feature carrying module (in this embodiment, the feature carrying module may include a magnet). The movement may include a processor, a display screen, a mobile communication module, a wireless communication module, an identification module (in this embodiment, the feature carrying module may include a Hall component), a button, and other parts shown in FIG. 1A.

In embodiments of this application, different appearances, such as different shapes and different colors, may be designed for the watch housing of the smartwatch. Different feature information (for example, different quantities/shapes of magnetic pieces) may be carried on the watch housing. The movement of the smartwatch may be mounted to the watch housing by using screws or in another manner. For example, FIG. 2 is a schematic diagram of a housing of a smartwatch according to an embodiment of this application. An appearance in the schematic diagram shown in section (a) of FIG. 2 is different from an appearance in the schematic diagram shown in section (b) of FIG. 2. Apart 21 in the schematic diagram shown in section (a) of FIG. 2 and a part 21 in the schematic diagram shown in section (b) of FIG. 2 are a hollow part of the watch housing, and the movement may be mounted in the hollow part.

FIG. 3 is a flowchart of a control method according to an embodiment of this application. As shown in FIG. 3, the method may include the following steps.

S301: A movement of a smartwatch identifies a watch housing to obtain feature information of the watch housing.

It should be understood that the watch housing in S301 is a watch housing changed by a user. The feature information of the watch housing may also be denoted as first information.

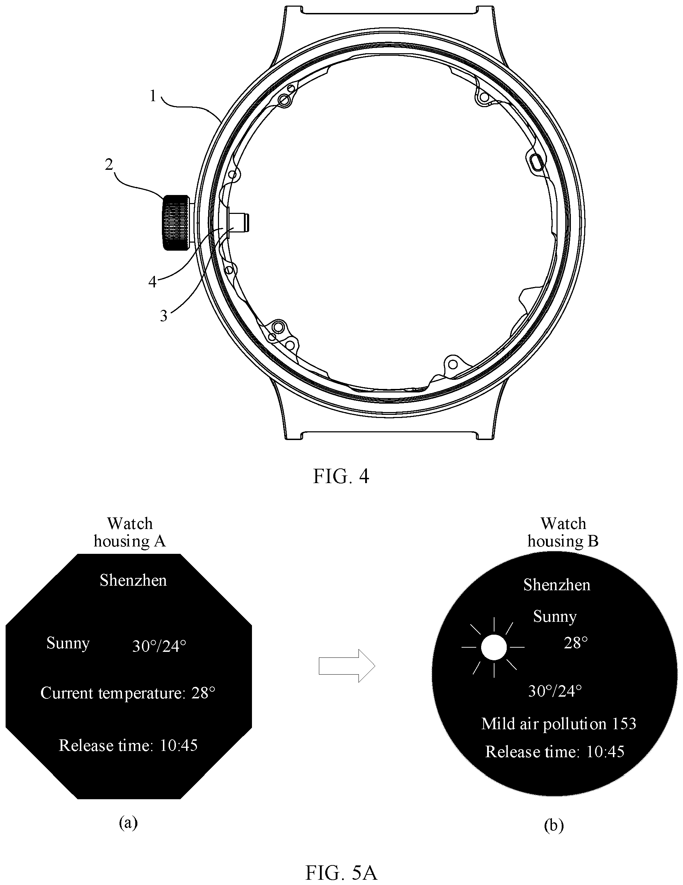

In this embodiment of this application, an example in which a wearable device is a smartwatch is used. The watch housing of the smartwatch is detachable. In other words, the movement and the watch housing are separable. A user may remove and change the watch housing of the smartwatch according to a requirement of the user. For example, FIG. 4 is a schematic diagram of a smartwatch according to an embodiment of this application. FIG. 4 may include a watch housing 1, a crown 2, a guide tube 3, and a movement housing 4. It should be understood that a movement is disposed in the movement housing 4. The movement is not shown in FIG. 4. The watch housing 1 is detachably connected to an outer side of the movement housing 4 by using snaps or screws, or in another connection manner. Athrough hole is provided on the watch housing 1. The guide tube 3 is provided on the movement housing 4 and is disposed opposite to the through hole provided on the watch housing 1. The crown 2 may include a knob and a stem. At least a part of the stem may pass through the through hole. The knob is located on a side of the through hole away from the guide tube 3. When the knob is pulled, the stem is configured to move axially away from the guide tube 3. In other words, the crown 2 and the guide tube 3 may form a clutch mechanism, and the crown 2 may be disengaged from the guide tube 3 by controlling the crown 2, to enable the crown 2 to be separated from the movement housing 4. After the crown 2 is away from the guide tube 3 and is separated from the movement housing 4, the movement housing 4 and the watch housing 1 can be separated from each other. On the contrary, when the knob is pushed, the stem is configured to move axially toward the guide tube 3, to implement a further lock between the movement housing 4 and the watch housing 1.

In some embodiments, the movement of the smartwatch may include an identification module (which may also be referred to as a sensing module), and the watch housing may include a feature carrying module. When the user mounts the watch housing to the movement, the identification module of the movement may detect the feature information included on the watch housing of the smartwatch, and then identify the watch housing based on the detected feature information.

The following describes an identification manner by using a plurality of examples.

### Example 1: A magnetic piece is mounted on the watch housing of the smartwatch, and a Hall component is mounted on the movement.

During mounting the watch housing to the movement from top to bottom, the magnetic piece attached on the watch housing moves closer to the Hall component, to cause a change in a magnetic field sensed by the Hall component in the movement. After the magnetic piece attached to the watch housing is mounted to the movement, the magnetic field of the Hall component in the movement may reach a fixed state. In this case, the Hall component may output a signal, for example, output a magnetic field state. In other words, different quantities of magnetic pieces are disposed at different positions on different watch housings, so that after a watch housing is mounted to the movement, the Hall component on the movement can sense a corresponding magnetic field state and find a corresponding watch housing based on the magnetic field state, thereby achieving identification of the watch housing by the movement. FIG. 2 is used as an example. Assuming that two identical magnets are disposed at positions close to two upper screws in the schematic diagram shown in section (a) of FIG. 2, and one magnet is disposed at a position close to and between two upper screws in the schematic diagram shown in section (b) of FIG. 2, the Hall component disposed at a position at the middle of and close to the upper part of the movement may identify that the two watch housings are different watch housings.

### Example 2: An NFC module is mounted on the movement of the smartwatch.

When the NFC module is mounted on the movement, an induction card reader or an induction card may be mounted on the watch housing. After the watch housing is mounted to the movement, the NFC module on the movement may sense the induction card reader or the induction card on the watch housing, to achieve identification of the watch housing based on sensed information.

### Example 3: The movement of the smartwatch is mounted with a photoelectric element, and a coating composed of different substances is provided on the watch housing.

The photoelectric element may emit an optical signal. After the watch housing is mounted to the movement, the optical signal emitted by the photoelectric element may irradiate the coating of the watch housing. Because different coatings have different absorbance for optical signals, a reflected optical signal may be converted into an electrical signal by the photoelectric element. Then, the watch housing may be identified based on the electrical signal. It should be understood that a strength of the electrical signal (obtained by conversion of the reflected optical signal) may be used to represent absorbance for the optical signal. In addition, specific information of the coating, for example, what substances is the coating formed by, may be inversely derived by using the absorbance of the optical signal.

It should be noted that a manner of identifying the watch housing by the movement is not specifically limited in embodiments of this application. For example, in addition to the Hall component, the NFC module, and the photoelectric effect in the foregoing examples, another method such as a resistance effect may be used to identify the watch housing.

Optionally, in this embodiment of this application, to prevent misidentification in some special cases (for example, a case in which the watch housing is placed next to the movement but not mounted to the movement), a detection may be performed by a light sensor when a crown is pushed into the movement, so that whether the watch housing is mounted to the movement can be identified. Alternatively, magnets may be placed on both upper and lower surfaces of the watch housing, so that strengths of magnetic fields of the housing outside and inside the movement may be identified by using a Hall sensor, thereby preventing misidentification.

S302: The movement of the smartwatch obtains parameter information of the watch housing based on the feature information of the watch housing.

In some embodiments, after identifying the feature information of a currently mounted watch housing, the movement may compare the feature information of the watch housing with a pre-stored feature information set of the watch housing, to find a corresponding watch housing in the pre-stored feature information set of the watch housing, and further obtain the parameter information of the watch housing. The parameter information of the watch housing may include information such as a manufacturer, a shape, and a color. It should be understood that the parameter information of the watch housing may also be denoted as second information.

For example, the magnetic field state in Example 1 is used as an example. A wearable device, such as a movement of a smartwatch, may pre-store a correspondence between a magnetic field state and parameter information of a watch housing, for example, as shown in Table 1.

**Table 1**

| Magnetic field state | Watch housing type | Manufacturer | Model | Brand logo (logo) | Operating system | Watch housing color | Bottom housing color | Waterproof level | Flashlight level | Watch housing material |
|---|---|---|---|---|---|---|---|---|---|---|
| Magnetic field state A | Watch housing 1 | Manufacturer 1 | Model 1 | Logo 1 | Operating system A | Black | Gray | 50 m | High-intensity flashlight | Metal |
| Magnetic field state B | Watch housing 2 | Manufacturer 1 | Model 2 | Logo 1 | Operating system A | White | Black | 30 m | High-intensity flashlight | Metal |
| Magnetic field state C | Watch housing 3 | Manufacturer 2 | Model 3 | Logo 2 | Operating system B | White | White | 100 m | Flashlight | Plastic |

It can be learned from Table 1 that the parameter information of the watch housing may include a watch housing type, a manufacturer, a watch housing model, a brand logo (logo) of the watch housing, an operating system adapted to the watch housing, a watch housing color, a bottom housing color, a waterproof level, and a flashlight level. Certainly, the parameter information of the watch housing may further include more information, such as a shape of a bottom housing, and a color of a bezel. This is not specifically limited herein.

In a possible implementation, a correspondence between identifier (identifier, ID) information carried on the watch housing and the watch housing may be further pre-stored, and then a corresponding watch housing is found based on an ID carried on the feature carrying module included in the watch housing. The ID is identifier information that uniquely identifies the watch housing. For example, for a correspondence between the ID information and the parameter information of the watch housing, refer to the following Table 2.

**Table 2**

| Identifier informatio n | Watch housin g type | Manufacture r | Mode l | Bran d logo (logo ) | Operatin g system | Watch housin g color | Bottom housin g color | Waterproo f level | Flashligh t level |
|---|---|---|---|---|---|---|---|---|---|
| ID 1 | Watch housin g 1 | Manufacture r 1 | Mode l 1 | Logo 1 | Operatin g system A | Black | Black | 50 m | High-intensity flashlight |
| ID 2 | Watch housin g 2 | Manufacture r 1 | Mode l 1 | Logo 1 | Operatin g system A | White | Gray | 100 m | High-intensity flashlight |
| ID 3 | Watch housin g 3 | Manufacture r 2 | Mode l 3 | Logo 2 | Operatin g system B | Black | Gray | 300 m | Flashligh t |

It should be understood that the foregoing table is merely an example description. A storage form and storage content of the correspondence are not specifically limited in embodiments of this application. For example, in Table 2, a shape of the watch housing, a color of the bezel, and the like may be further included.

S303: The movement of the smartwatch generates a change instruction based on the parameter information of the watch housing, so that the smartwatch performs a corresponding change based on the change instruction.

For convenience of description, a watch housing before change may be denoted as a "watch housing A", and a watch housing after the change may be denoted as a "watch housing B". The watch housing A and the watch housing B are different types of watch housings. Before S301 is performed, the watch housing A may be changed into the watch housing B, and the watch housing B may be mounted to the movement.

In a possible implementation, before S303 is performed, the movement of the wearable device may compare parameter information identified by the two watch housings, to determine whether the parameter information of the watch housings before and after the change is the same. If the parameter information of the watch housing does not change before and after the housing change (for example, the watch housing A may be removed and then re-mounted to the movement), no change instruction is to be generated. Certainly, if some parameter information, such as an operating system, a function of a button, and a model manufacturer, are not changed before and after the change of the watch housing, and some parameter information, such as a watch housing color, is changed, in this case, there is no need to prompt a user to perform system setting or the like. The user may only be prompted that the color of the watch housing is changed and whether a corresponding bottom housing color or an optional watch face theme needs to be changed. Further, an optional watch face or the like corresponding to the watch housing B may be displayed based on an option of the user, so that the user can adaptively select a watch face based on the change of the watch housing color.

In some embodiments, after obtaining the feature information of the watch housing, the identification module on the movement of the wearable device may send the feature information of the watch housing to a processor on the movement. Then, the processor may generate a corresponding change instruction based on the feature information of the watch housing. The change instruction includes, but is not limited to, a change of a system, a user interface (user interface, UI), user experience (user experience, UX), a function, and an appearance, such as a color and a shape, of the wearable device.

The following describes changes of the wearable device by using examples.

### Example 1: The UI of the wearable device is changed.

Refer to FIG. 5A. It is assumed that the watch housing A is a watch housing of a manufacturer A, and the watch housing B is a watch housing of a manufacturer B. Refer to section (a) of FIG. 5A for a schematic diagram of displaying of a watch face of the smartwatch when a user uses the watch housing A. When the watch housing A is used, a display screen of the smartwatch may display a city name (such as Shenzhen), temperature information (including a minimum temperature and a maximum temperature of a day, and a current temperature), and temperature release time. Refer to section (b) of FIG. 5A for a schematic diagram of displaying of the watch face of the smartwatch after the user removes the watch housing A from the movement and changes the watch housing into the watch housing B. When the watch housing B is used, the display screen of the smartwatch may display a city name (such as Shenzhen), weather condition information (such as sunny and a sun icon corresponding to a sunny weather), and temperature information (including a minimum temperature and a maximum temperature of a day, and a current temperature), pollution status information (for example, mild air pollution 153), and temperature release time. It can be learned from the schematic diagrams shown in sections (a) and (b) of FIG. 5A that the UI of the smartwatch may be changed with the change of the watch housing. Certainly, in a practical product implementation, more or less content may be displayed on the display screen of the smartwatch. This is not limited in this application.

It can be learned from the schematic diagram shown in FIG. 5A that the two watch housings have different shapes. Assuming that the display screen of the smartwatch is circular, when the watch housing A is used, the watch housing A may block a part of the display screen. For example, the watch housing A is in an octagonal shape shown in the figure. After the watch housing A is mounted to the movement, a display area on the movement may be adjusted from circular to octagonal to adapt to a change in the shape of the watch housing, to prevent a case in which a part of content displayed cannot be viewed by the user.

In some embodiments, when the watch housing A and the watch housing B are watch housings from different manufacturers, for example, when the watch housing A is a watch housing from the manufacturer A, and the watch housing B is a watch housing from the manufacturer B, design of watch faces may also be different. For example, when the watch housing A is used, available watch faces include a watch face designed by the manufacturer A, and when the watch housing B is used, available watch faces include a watch face designed by the manufacturer B. Certainly, a watch face designed by a manufacturer may display a logo of the manufacturer, or may not display the logo of the manufacturer, or the like. This is not limited in this application.

It should be noted that the change of the UI of the smartwatch may include, but is not limited to, a change of a UI shape, a color, text, a location, and the like. This is not limited in this application.

### Example 2: The color of the bottom housing of the wearable device is changed.

In a possible implementation, the bottom housing/the bezel of the movement may be coated with an electrochromic material (for example, tungsten trioxide). After the watch housing is mounted to the movement, the electrochromic material may undergo a redox reaction under electric fields of different strengths, so that the color of the bottom housing/the bezel is changed. In other words, different electric field strengths may correspond to different colors, for example, as shown in Table 3. It should be understood that the bezel refers to an annular area on an edge of the display screen.

**Table 3**

| Electric field strength | Color |
|---|---|
| Electric field strength 1 | Color A |
| Electric field strength 2 | Color B |
| Electric field strength 3 | Color C |

For example, refer to FIG. 5B. 51 in FIG. 5B represents an electrode. 52 represents a physiological sensor, which may include, for example, a PPG sensor. 53 represents a bottom housing. 54 represents a light-emitting diode (light-emitting diode, LED). When a user uses the watch housing A, the color of the bottom housing 53 of the smartwatch may be a color A, for example, refer to section (a) of FIG. 5B. When the user removes the watch housing A from the movement and changes the watch housing into the watch housing B, the movement may obtain an electric field strength (for example, the electric field strength 2) generated after the watch housing B is mounted to the movement. Then, the color of the watch housing of the smartwatch is changed based on the magnitude of the electric field strength in Table 3. For example, the color may be changed into the color B shown in section (b) of FIG. 5B. It can be learned from the schematic diagrams shown in sections (a) and (b) of FIG. 5B that the color of the bottom housing of the smartwatch may be changed with the change of the watch housing. The color of the bottom housing may be a color matching the color of the watch housing. For example, the color of the bottom housing may be a color that is the same as or similar to the color of the watch housing. Alternatively, colors of the watch housing and the bottom housing may be gradient colors, or the like. Certainly, the color of the bottom housing may alternatively be a color that differs greatly from the color of the watch housing. For example, the color of the watch housing is white, and the color of the bottom housing is black. This is not limited in this application. Alternatively, the color of the bottom housing may be two or more colors. In this way, the user may be prompted to select a color based on a preference of the user, or the color of the bottom housing may be changed in the system.

It should be noted that in this embodiment of this application, an electric field may be formed based on an electrode 51. Under the action of the electric field, the electrochromic material undergoes a redox reaction to cause the color of the bottom housing to change. In FIG. 5B, a position of the electrode 51 is merely an example. In practical application, the electrode 51 may be located on an inner surface of the bottom housing (that is, a side close to skin when the watch is worn), or may be located on an outer surface of the bottom housing (that is, a side away from the skin when the watch is worn), or the like. This is not limited in this application, provided that an electric field can be formed, to cause the color of the bottom housing to undergo a redox reaction.

It should be understood that the color A and the color B in FIG. 5B are represented by different lines. In a practical product implementation, the color of the bottom housing may be black, gray, silver, or the like. This is not limited in this application.

### Example 3: The system of the wearable device is changed.

It is assumed that the watch housing A and the watch housing B are watch housings from different manufacturers, and operating systems used corresponding to the watch housings from the two manufacturers are different. For example, the operating system used after the watch housing A is mounted to the movement is an operating system 1, and the operating system used after the watch housing B is mounted to the movement is an operating system 2. In some embodiments, configuration files of different operating systems may be pre-stored in the movement of the wearable device. For example, configuration files of the operating system 1 and the operating system 2 may be pre-stored in a memory of the movement.

In a possible implementation, if the watch housing A and the watch housing B correspond to different operating systems, after a user changes the watch housing A into the watch housing B, a change option may be displayed on the display screen of the wearable device. Then, the user may choose whether to switch the system according to a requirement of the user. An example in which a shape of the display screen is rectangular is used as an example. It is assumed that a shape of the watch housing A is hexagonal, and a shape of the watch housing B is rectangular. For example, as shown in FIG. 5C, it is assumed that after the watch housing B is mounted to the movement, a change option 501 shown in section (a) of FIG. 5C may be displayed on the display screen of the smartwatch. For example, the change option may be "A new system is detected. Do you want to switch?". 502 represents an option button "Yes", and 503 represents an option button "No". After the user taps the option button "Yes" 502, the smartwatch may respond to the tap operation of the user to perform system switching, for example, the smartwatch may display a schematic diagram shown in section (b) of FIG. 5C. In this case, prompt information 504, for example, "System switching is in progress. Do not operate!", may be displayed on the display screen of the smartwatch. After the system switching is completed, for example, a home screen of the operating system B may be displayed. Certainly, if the user taps the option button "No" 503, the smartwatch may respond to the tap operation of the user to skip system switching. In this case, optionally, prompt information may be displayed on the display screen, to prompt the user that a current operating system does not correspond to the manufacturer of the watch housing, which may cause a compatibility problem such as a system error, and that the system may be switched subsequently in system settings.

Optionally, after the user taps the option button "No" 503, the smartwatch may continue to use the operating system corresponding to the watch housing A. If the system needs to be switched in subsequent use, the user may choose to switch the system in the system settings to improve compatibility.

In another possible implementation, if the watch housing A and the watch housing B correspond to different operating systems, after the user changes the watch housing A into the watch housing B, the movement of the wearable device may automatically switch the operating system corresponding to the watch housing A to the operating system corresponding to the watch housing B. For example, after the user changes the watch housing A into the watch housing B, prompt information shown in section (b) of FIG. 5C may be displayed on the display screen of the smartwatch. For example, the prompt information may be "System switching is in progress. Do not operate!". After the system switching is completed, the home screen of the operating system B may be displayed.

It should be understood that the prompt information and the like shown in the foregoing schematic diagrams are merely examples. In a practical product implementation, the displayed prompt information may alternatively be another information, and more or fewer controls or the like may be displayed on the interface. This is not limited in this application.

### Example 4: The function of the wearable device is changed.

### (1) A function of a button is changed.

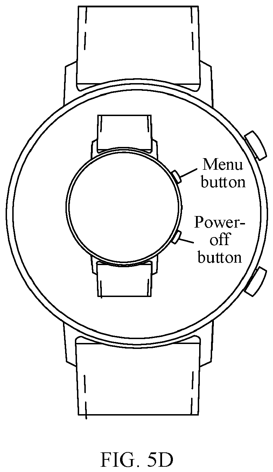

In a possible implementation, assuming that buttons on the watch housing include two function buttons, when the watch housing of the smartwatch is the watch housing A, for example, a function of a button 1 is a menu button, and a function of a button 2 is a power-off button (as shown in FIG. 5D, an upper button is the button 1, and a lower button is the button 2). If the functions and/or operation logics of the function buttons on the watch housing B and the watch housing A are different, after the user changes the watch housing A into the watch housing B, the function of the button 1 and the function of the button 2 are changed. For example, the function of the button 1 may be changed into a power-off button, and the function of button 2 may be changed into a menu button. Certainly, the functions of the buttons may alternatively be other functions. This is not limited in this application. For this implementation, after the user changes the watch housing A into the watch housing B, prompt information may be displayed on the display screen of the smartwatch, to prompt the user that the function of the button changes. For example, refer to FIG. 5D. Prompt information may be displayed on the display screen of the smartwatch. The prompt information may be shown in the schematic diagram. The function of each function button after the movement is mounted to the watch housing B can be learned from the schematic diagram. It should be understood that the prompt information may further be in a form of an animation. The animation may display corresponding response interfaces of the smartwatch when the user operates different function buttons by gestures. This is not limited in this application.

In another possible implementation, after the user changes the watch housing A to the watch housing B, the user may manually choose whether to change the function corresponding to the button. Refer to FIG. 5E. For example, prompt information 551 shown in section (a) of FIG. 5E may be displayed on the display screen of the smartwatch. For example, the prompt information may be "A new watch housing is detected. Do you want to change functions of buttons?". 552 represents an option button "Yes", and 553 represents an option button "No". If the user taps the option button "Yes" 552, the smartwatch may respond to the tap operation of the user to enter a button function setting interface, for example, display an interface shown in section (b) of FIG. 5E. The user may set a function of the button on the setting interface according to requirements, usage habits, or the like of the user. For example, the user may select a function of a button through a drop-down button 561 on a button function option. For example, the user may set the button 1 as a power-on/power-off button, set the button 2 as a menu button, and set a combination of the button 1 and the button 2 as a screenshot function. After the setting is completed, the user may tap a finish button 562 at an upper right corner of the interface. The smartwatch may respond to the tap operation of the user to configure the function of the button. For example, the smartwatch may display the interface shown in section (c) of FIG. 5E, and prompt information 571 may be displayed on the interface. The prompt information 571 may be "Configuring functions of buttons, please wait...". After the configuration of the function of the button is completed, a home screen of the smartwatch may be displayed. If the user taps the option button "No" 553, the smartwatch responds to the tap operation of the user and does not change the function of the button.

In other words, after the user changes the watch housing A into the watch housing B, the user may set functions of the buttons based on a preference of the user, or may set a function of a combination of the buttons, or the like. This is not limited in this application. FIG. 5E is merely an example description. In this application, the user may alternatively set the function of the button in another manner. For example, the user may set functions of buttons in an application "settings" on the smartwatch, or may set functions of buttons by using a mobile phone. For example, the user may bind the smartwatch to the mobile phone (for example, an exercise and health application on the mobile phone), and then perform device setting on a setting interface of the smartwatch, to implement setting of the functions of the buttons.

### (2) A function of the flashlight is changed.

In some embodiments, a lens may be mounted to the watch housing, and a light source component may be mounted to the movement. The light source on the movement can increase light intensity through a light condensing effect of the lens, to enable the wearable device to have a function of a high-intensity flashlight.

In a possible implementation, it is assumed that after the user changes the watch housing A into the watch housing B, a lens is mounted to the watch housing B, and a light source component is mounted to the movement. In this case, prompt information may be displayed on the display screen of the smartwatch. The prompt information may be used for prompting the user that the smartwatch has a function of a high-intensity flashlight. For example, refer to FIG. 5F. Prompt information 581 shown in section (a) of FIG. 5F may be displayed on the display screen of the smartwatch. For example, the prompt information 581 may be prompt information that "This smartwatch has a high-intensity flashlight function". In addition, the prompt information may be displayed for specified duration, for example, 10s.

In addition, a button "?" 582 may be displayed in an upper right corner of prompt information shown in section (a) of FIG. 5F. If the user taps the button 582, the smartwatch may respond to the tap operation of the user to display an interface as shown in a schematic diagram in section (b) of FIG. 5F, and display a difference between a high-intensity flashlight and a regular flashlight or display an advantage of a high-intensity flashlight. For example, "A high-intensity flashlight has advantages of power saving, high durability, and high intensity". In this way, the user can view an introduction of the high-intensity flashlight, thereby improving user experience.

In another possible implementation, it is assumed that a lens is mounted to the watch housing B, and a light source component is mounted to the movement. When the user changes the watch housing A into the watch housing B, for example, as shown in FIG. 5G, the user may perform a gesture operation, for example, as shown in section (a) of FIG. 5G, a flicking operation from bottom to top along the display screen of the smartwatch. The smartwatch may respond to the flicking operation of the user to invoke a status bar of the smartwatch, for example, as shown in section (b) of FIG. 5G. In this case, a name below a flashlight icon in the status bar may be "high-intensity flashlight". In other words, after the watch housing is changed, the name of the flashlight may change with the function of the watch housing. For example, the lens on the housing may increase the light intensity, and the name "flashlight" may change into "high-intensity flashlight". On the contrary, if the user changes the watch housing B into the watch housing A, the name may be changed from "high-intensity flashlight" to "flashlight". This is not limited in this application. It should be understood that the gesture operation may alternatively be another gesture operation. This is not limited in this application.

### Example 5: Performance of the wearable device is changed.

### (1) Signal enhancement

In some embodiments, a material of the watch housing may be a metal material. In this case, the watch housing also has an antenna function, and the watch housing and the movement may be electrically connected by using a connection point (including, but not limited to, a metal spring, conductive adhesive or conductive cloth, a connecting screw, or the like) that secure each other as a feed point. The watch housing around the movement may be considered as an antenna enhancement module, and can improve antenna performance of the wearable device. In other words, when the watch housing is a metal watch housing, the watch housing may have an antenna signal enhancement capability. In a possible implementation, antenna enhancement prompt information may be displayed in the status bar shown in section (b) of FIG. 5G. For example, "signal enhanced" may be displayed next to a WLAN icon. Certainly, after a watch housing A made of a plastic material is changed into a watch housing B made of a metal material, prompt information may be directly displayed on the display screen without a need of viewing the status bar by the user, to prompt the user that the new watch housing has a signal enhancement effect on the WLAN.

### (2) Waterproof performance

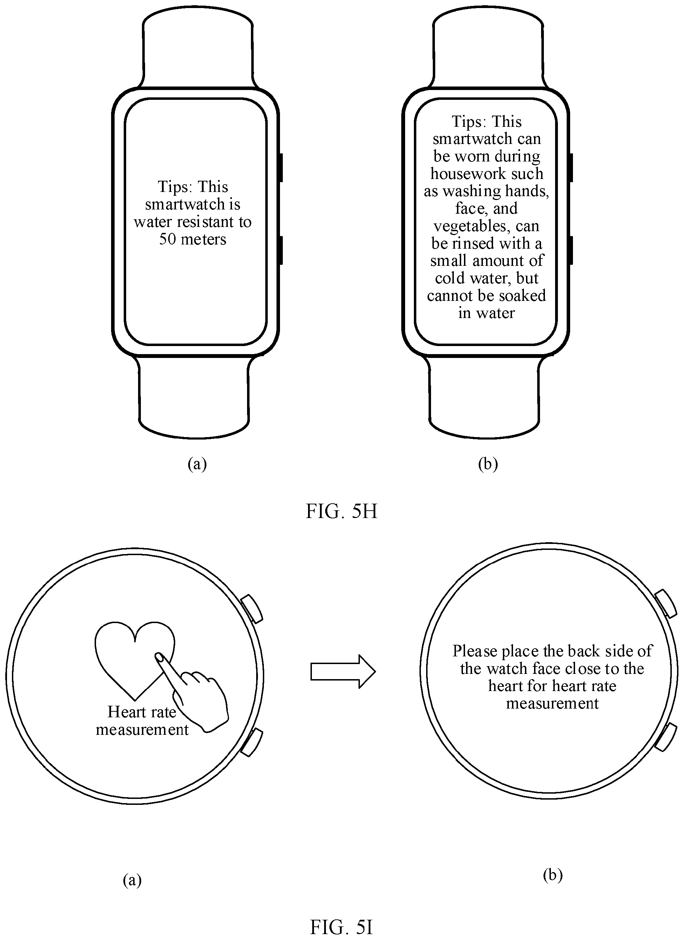

In some embodiments, a material of the watch housing may be a waterproof material. For example, a material with an IP68 waterproof level is selected, to improve waterproof performance of the wearable device. For example, after the user changes the watch housing A into the watch housing B, prompt information may be displayed on the display screen of the smartwatch, and the prompt information may be used for prompting the user of a waterproof level of the smartwatch. For example, refer to section (a) of FIG. 5H. The display screen of the smartwatch may display "Tips: This smartwatch is water resistant to 50 meters". Alternatively, prompt information that is easier to understand for the user may be displayed on the display screen of the smartwatch. For example, the prompt information may be "Tips: This smartwatch can be worn during housework such as washing hands, face, and vegetables, can be rinsed with a small amount of cold water, but cannot be soaked in water" shown in section (b) of FIG. 5H. It should be understood that the foregoing prompt information is merely an example description. This is not limited in this application.

### (3) Reliability

In some embodiments, after the watch housing of the smartwatch is changed, reliability of the smartwatch may be improved for reasons such as the material of the watch housing or the shape of the watch housing. The reliability may include a drop height of the device, and the like. After the watch housing is changed, prompt information may be displayed on the display screen or viewed by the user in system settings. Refer to the description of the foregoing embodiments, and details are not described herein again.

### Example 6: An operation manner is changed when a function of the wearable device is used.

Because the smartwatch may include a sensor configured to measure blood pressure, a heart rate, blood oxygen saturation, and the like, when a wearing manner of the smartwatch changes, a corresponding operation manner may change. For example, when the watch housing A is used on the smartwatch and is worn on a wrist, a user may directly click a button for heart rate measurement, maintain a proper posture (for example, keep an arm horizontally and still) and start measuring. If the user changes the watch housing A into the watch housing B, and the user does not wear the watch on the wrist, as shown in FIG. 5I, after the user taps a health monitoring application, for example, taps a heart rate measurement application in the schematic diagram shown in section (a) of FIG. 5I, prompt information may be displayed on the display screen of the smartwatch. The prompt information is used for prompting the user of a correct operation manner. For example, the prompt information "Please place the back side of the watch face close to the heart for heart rate measurement" shown in section (b) of FIG. 5I may be displayed. Certainly, when the user taps different applications for health measurement, different prompt information may be displayed. This is not limited in this application.

According to the foregoing embodiments, the watch housing of the smartwatch can be changed conveniently. Moreover, after the watch housing is changed, changes in a display interface, performance, a function, and the like of the smartwatch can be implemented, thereby improving personalized design of the smartwatch and improving user experience.

In the foregoing embodiments, each watch housing of the smartwatch has a feature carrying module, and each feature carrying module has a corresponding component, and the like. If the user removes the watch housing B from the movement, a UI, an operating system, and the like of the smartwatch may continue to be displayed based on the parameter information corresponding to the watch housing B. Certainly, after the user removes the watch housing B from the movement, the smartwatch may be reset. To be specific, content displayed is based on parameter information corresponding to a watch housing used when delivered from a factory. This is not limited in this application. In addition, assuming that the watch housing on the current smartwatch is a watch housing B, the user removes the watch housing B and changes the watch housing B into a watch housing C, but the watch housing C does not have a feature carrying module or there is no information on the feature carrying module. In this case, the UI, the operating system, and the like corresponding to the watch housing B may be continued to be used as the UI, the operating system, and the like of the smartwatch.

Certainly, if it is found that there is no feature carrying module on the watch housing after the watch housing is mounted to the movement, the watch housing may be a fake watch housing (that is, a counterfeit watch housing). To prevent illegitimate use of the movement, use of a function of the movement may be restricted. Alternatively, if it is found that there is no information on the feature carrying module after the watch housing is mounted to the movement, in other words, the movement cannot identify information, the watch housing may be a defective product produced by a manufacturer, or the information on the feature carrying module may be invalid (for example, magnet degaussing). In this case, the movement may prompt the user that no information is identified, and use of some functions may be restricted, to improve security.

In the foregoing embodiments provided in this application, the method provided in embodiments of this application is described based on that the method is executed by an electronic device. To implement functions in the method according to the foregoing embodiments of this application, the electronic device may include a hardware structure and/or a software module, and implement the foregoing functions in a form of the hardware structure, the software module, or a combination of the hardware structure and the software module. Whether a specific function in the foregoing functions is performed by the hardware structure, the software module, or the combination of the hardware structure and the software module depends on specific application and a design constraint of the technical solutions.

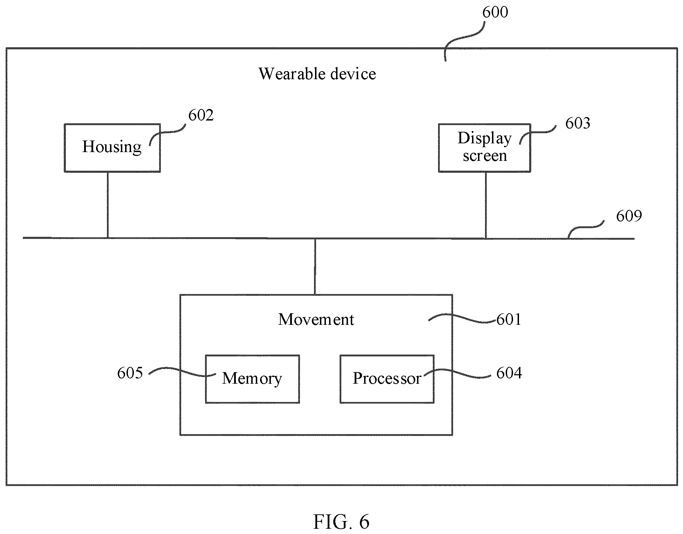

As shown in FIG. 6, some other embodiments of this application disclose a wearable device. As shown in FIG. 6, a wearable device 600 includes: a movement 601, a housing 602, and a display screen 603; one or more processors 604; one or more memories 605; one or more sensors 606 (not shown) and a plurality of applications 607 (not shown); and one or more computer programs 608 (not shown). The foregoing components may be connected by one or more communication buses 609.

The movement 601 may include an identification module, and the housing 602 may include a feature carrying module. When the housing 602 is mounted to the movement 601, the identification module may sense first information carried on the feature carrying module.

The display screen 603 is configured to display prompt information, for example, may display prompt information of a waterproof level, a waterproof capability, a flashlight level, operating system switching, and the like. In a possible implementation, the display screen 603 is integrated or fixedly mounted to a surface of the movement 601, to form an integrated structure relative to the housing 602, thereby facilitating detachably mounting of the movement 601 and the display screen 603 in the housing.

The memory 605 stores one or more computer programs, and the one or more computer programs include instructions. The processor 604 invokes the instructions stored in the memory 605 to enable the wearable device 600 to execute the method in the foregoing embodiment. In this embodiment of this application, the processor 604 and the memory 605 may be disposed in the movement. For example, in this application, the memory 605 may store a correspondence between the first information and second information, for example, the content in Table 1 and Table 2 described in the foregoing embodiments. The processor 604 is configured to change a color and/or a display interface of the wearable device 600 based on the second information.

In embodiments of this application, the processor 604 may be a general-purpose processor, a digital signal processor, an application-specific integrated circuit, a field programmable gate array or another programmable logic device, a discrete gate or transistor logic device, or a discrete hardware component. The processor 604 can implement or execute the methods, steps, and logical block diagrams disclosed in embodiments of this application. The general-purpose processor may be a microprocessor, a regular processor, or the like. The steps of the methods disclosed with reference to embodiments of this application may be directly performed and completed by using a hardware processor, or may be performed and completed by using a combination of hardware and software modules in the processor. The software module may be located in the memory 605. The processor 604 reads program instructions in the memory 605, and completes the steps of the foregoing methods in combination with hardware of the processor 604.

In embodiments of this application, the memory 605 may be a nonvolatile memory, for example, a hard disk drive (hard disk drive, HDD) or a solid-state drive (solid-state drive, SSD), or may be a volatile memory (volatile memory), for example, a RAM. The memory may alternatively be any other medium that can be configured to carry or store expected program code in a form of instructions or a data structure and that can be accessed by a computer, and is not limited in this application. Alternatively, the memory in embodiments of this application may be a circuit or any other apparatus that can implement a storage function, and is configured to store instructions and/or data.

It may be clearly understood by a person skilled in the art that, for the purpose of convenience and conciseness of description, for a detailed working process of the foregoing apparatus and unit, reference may be made to a corresponding process in the foregoing method embodiments, and details are not described herein.

Based on the foregoing embodiments, this application further provides a computer storage medium. The computer storage medium stores a computer program. When the computer program is executed by a computer, the computer executes the control method provided in the foregoing embodiments.

An embodiment of this application further provides a computer program product, including instructions. When the instructions are run on a computer, the computer is enabled to execute the control method provided in the foregoing embodiments.

Embodiments of this application are described with reference to the flowcharts and/or block diagrams of the method, the device (system), and the computer program product according to embodiments of this application. It should be understood that each procedure and/or block in the flowcharts and/or block diagrams and a combination of procedures and/or blocks in the flowcharts and/or block diagrams may be implemented by using instructions. These instructions may be provided to a general-purpose computer, a special-purpose computer, an embedded processor, or a processor of another programmable data processing device to generate a machine, so that an apparatus configured to implement functions specified in one or more procedures in the flowcharts and/or one or more blocks in the block diagrams is generated by using instructions executed by the computer or the processor of another programmable data processing device.

These computer program instructions may be stored in a computer-readable memory that can instruct the computer or another programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

These computer program instructions may be loaded onto a computer or another programmable data processing device, so that a series of operation steps are performed on the computer or another programmable device, thereby generating computer-implemented processing. Therefore, the instructions executed on the computer or another programmable device provide steps for implementing a specific function in one or more processes in the flowcharts and/or in one or more blocks in the block diagrams.

## Claims

1. A control method, applied to a wearable device, wherein the wearable device comprises a movement and a housing, and the movement is detachably mounted in the housing; and the method comprises:
obtaining, by the movement, first information in response to a first operation that is for the wearable device, wherein the first information is related to the housing, and the first operation comprises mounting the movement in the housing; and
controlling, by the movement based on the first information, a color and/or a display interface of the wearable device to change correspondingly.

2. The method according to claim 1, wherein the controlling, by the movement based on the first information, a color and/or a display interface of the wearable device to change correspondingly specifically comprises:
obtaining, by the movement, second information based on the first information; and
controlling, by the movement based on the second information, the color and/or the display interface of the wearable device to change correspondingly.

3. The method according to claim 2, wherein a bottom housing and/or a bezel of the wearable device are/is coated with an electrochromic material, and the second information comprises color information of the housing; and the movement controls, based on the color information, a color of the bottom housing and/or a color of the bezel of the wearable device to match the color information of the housing.

4. The method according to claim 2, wherein the second information comprises manufacturer information of the housing; and
the movement controls, based on the manufacturer information, a user interface UI of the wearable device to change, wherein the UI comprises one or more of a UI shape, a color, text, or a location.

5. The method according to claim 1 or 2, wherein the controlling, by the movement based on the first information, a color and/or a display interface of the wearable device to change correspondingly specifically comprises:
displaying first prompt information, wherein the first prompt information is used for prompting a user whether to switch an operating system of the wearable device; and
switching a first operating system to a second operating system in response to a second operation that is for the wearable device, wherein the first operating system is an operating system running on the wearable device before the first operation, and the second operating system is different from the first operating system.

6. The method according to claim 1 or 2, wherein the wearable device further comprises a button; and
the controlling, by the movement based on the first information, a color and/or a display interface of the wearable device to change correspondingly specifically comprises:
displaying second prompt information, wherein the second prompt information is used for prompting a user whether to change a function of the button of the wearable device;
displaying a button function setting interface in response to a third operation that is for the wearable device, wherein the interface comprises at least one option, and the option is used for setting a function performed by the button; and
controlling, in response to a fourth operation that is for the wearable device, the button to perform configuration based on the specified function; or
the controlling, by the movement based on the first information, a color and/or a display interface of the wearable device to change correspondingly specifically comprises:
displaying third prompt information, wherein the third prompt information is used for prompting a user of a function corresponding to the button.

7. The method according to claim 1 or 2, wherein the movement comprises a light source, the housing comprises a lens, and the lens is configured to converge light emitted by the light source; and
the controlling, by the movement based on the first information, a color and/or a display interface of the wearable device to change correspondingly specifically comprises:
displaying fourth prompt information, wherein the fourth prompt information is used for prompting a user that a flashlight is a high-intensity flashlight; or displaying, to a user in response to a fifth operation that is for the wearable device, that a flashlight is a high-intensity flashlight.

8. The method according to claim 1 or 2, wherein the controlling, by the movement based on the first information, a color and/or a display interface of the wearable device to change correspondingly specifically comprises:
displaying fifth prompt information, wherein the fifth prompt information is used for prompting a user of an antenna signal capability of the wearable device; or displaying, in response to a sixth operation that is for the wearable device, that a flashlight is a high-intensity flashlight.

9. The method according to claim 1 or 2, wherein the controlling, by the movement based on the first information, a color and/or a display interface of the wearable device to change correspondingly specifically comprises:
displaying sixth prompt information, wherein the sixth prompt information is used for prompting a user of a waterproof level or a waterproof capability of the wearable device.

10. The method according to claim 1 or 2, wherein the controlling, by the movement based on the first information, a color and/or a display interface of the wearable device to change correspondingly specifically comprises:
displaying seventh prompt information in response to a seventh operation that is for the wearable device, wherein the seventh prompt information is used for prompting a user of an operation manner of performing detection by using a physiological sensor.

11. The method according to any one of claims 1 to 10, wherein the movement comprises a Hall component, the housing comprises at least one magnetic piece, the first information comprises magnetic field induction information, and the magnetic field induction information is magnetic field information of the at least one magnetic piece sensed by the Hall component when the movement is mounted in the housing; or
the movement comprises a near field communication NFC module, the housing comprises an inductive card reader or an inductive card, and the first information is information sensed by the NFC module when the movement is mounted in the housing; or
the movement comprises a photoelectric element, the housing comprises a coating, and the first information comprises information obtained, based on an optical signal reflected by the coating, by the photoelectric element when the movement is mounted in the housing.

12. The method according to any one of claims 2 to 11, wherein the second information comprises at least one of the following information: a watch housing type, a manufacturer, a model, a brand logo, an operating system, a watch housing color, a bottom housing color, a bezel color, a waterproof level, a flashlight level, a watch housing shape, and a watch housing material.

13. The method according to any one of claims 2 to 12, wherein the obtaining, by the movement, second information based on the first information specifically comprises:
determining, by the movement based on a preset correspondence, the second information corresponding to the first information.

14. The method according to any one of claims 2 to 13, wherein the controlling, by the movement based on the second information, the color and/or the display interface of the wearable device to change correspondingly specifically comprises:
comparing the second information with pre-stored third information, wherein the third information is parameter information running on the wearable device before the first operation; and
when the second information is partially different from the third information, controlling, by the movement based on a part of the second information that is different from the third information, the color and/or the display interface of the wearable device to change correspondingly.

15. A wearable device, comprising:
a movement, wherein the movement comprises an identification module;
a housing, wherein the housing comprises a feature carrying module, and when the housing is mounted to the movement, the identification module senses first information carried on the feature carrying module;
one or more processors, disposed in the movement;
one or more memories, disposed in the movement; and
one or more computer programs, wherein
the one or more computer programs are stored in the one or more memories, the one or more computer programs comprise instructions, and when the instructions are invoked and executed by the one or more processors, the wearable device is enabled to execute the method according to any one of claims 1 to 14.

16. A computer-readable storage medium, comprising computer-readable instructions, wherein when the computer-readable instructions are read and executed by a computer, the computer is enabled to execute the method according to any one of claims 1 to 14.

17. A computer program product, comprising computer-readable instructions, wherein when the computer-readable instructions are read and executed by a computer, the computer is enabled to execute the method according to any one of claims 1 to 14.
